# EUROPEAN PATENT APPLICATION

(11) **EP 3 910 457 A1**
(43) Date of publication of application: **17.11.2021**
(21) Application number: 20762067.5
(22) Date of filing: 20.02.2020
(51) Int. Cl.: G06F 3/048

(54) **IMAGE RENDERING METHOD AND ELECTRONIC DEVICE**

(30) Priority: 26.02.2019 CN 201910141363
(71) Applicant: Huawei Technologies Co., Ltd., Shenzhen, Guangdong 518129 (CN)
(72) Inventor: DANG, Maochang, Shenzhen, Guangdong 518129 (CN); WANG, Hongliang, Shenzhen, Guangdong 518129 (CN); XU, Bo, Shenzhen, Guangdong 518129 (CN); FAN, Zhenhua, Shenzhen, Guangdong 518129 (CN); LI, Li, Shenzhen, Guangdong 518129 (CN); ZHANG, Ru, Shenzhen, Guangdong 518129 (CN)
(74) Representative: Gill Jennings & Every LLP
(86) International application number: PCT/CN2020/075974
(87) International publication number: WO 2020/173371

(57) **Abstract**

This application provides a graphic rendering method and an electronic device. The method includes: detecting, by an electronic device, a user input event when displaying a first graphic; generating a graphic rendering instruction based on the input event, where the graphic rendering instruction includes a rendering element of a target graphic; when rendering the target graphic based on the rendering element of the target graphic, re-rendering a first area that is in the first graphic and that needs to be re-rendered; synthesizing a re-rendered first area and a second area to obtain the target graphic, where the second area is an area that is in the first graphic and that does not need to be re-rendered; and displaying the target graphic. According to the graphic rendering method, the electronic device needs to render only the first area that is in the first graphic and that needs to be re-rendered, and does not need to re-render the second area (the area that does not need to be re-rendered). This helps reduce power consumption and improve efficiency.

## Description

This application claims priority to Chinese Patent Application No. 201910141363.X, filed with the China National Intellectual Property Administration on February 26, 2019 and entitled "GRAPHIC RENDERING METHOD AND ELECTRONIC DEVICE", which is incorporated herein by reference in its entirety.

### TECHNICAL FIELD

This application relates to the field of terminal technologies, and in particular, to a graphic rendering method and an electronic device.

### BACKGROUND

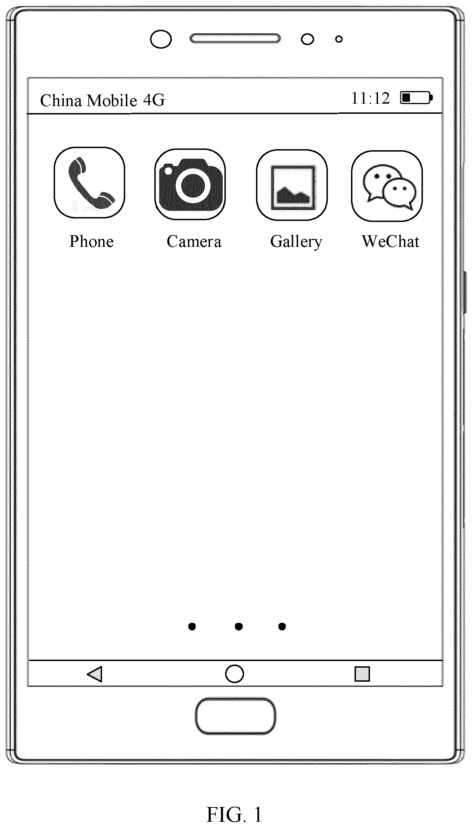

Currently, a display is disposed on each electronic device, and various graphical user interfaces (graphical user interface, GUI) may be displayed on the display. A mobile phone is used as an example. FIG. 1 is a schematic diagram of a GUI of the mobile phone. Usually, a GUI is a graphic rendered by the mobile phone through a series of graphic rendering processes.

In the conventional technology, the graphic rendering process of the mobile phone is as follows.

Because different areas in one GUI have different display content, the mobile phone may first render outlines of all areas, then add a picture to each outline (that is, perform a texture rendering process), to obtain graphics of all the areas, and then synthesize the graphics of all the areas into one GUI. The GUI shown in FIG. 1 is used as an example, and an area in which a phone application is located in FIG. 1 is used as an example. The mobile phone may render an outline of the area in which an icon of the phone application is located, and then add a picture of the phone application to the outline, to obtain the icon of the phone application. A similar manner is used for icons of other applications. After obtaining icons of all applications, the mobile phone synthesizes the icons of all the applications and a background picture into one GUI, and displays the GUI.

It can be learned from the foregoing description that a graphic rendering process for an area in the GUI includes rendering an outline and adding texture. Usually, there is relatively much display content in the GUI. The graphic rendering process in the conventional technology is relatively cumbersome, and efficiency is relatively low.

### SUMMARY

Embodiments of this application provide a graphic rendering method and an electronic device, to help improve graphic rendering efficiency of the electronic device.

According to a first aspect, an embodiment of this application provides a graphic rendering method. The method may be performed by an electronic device (for example, a mobile phone, a pad, or a notebook computer) having a display. The method includes: detecting, by the electronic device, a user input event when displaying a first graphic; generating a graphic rendering instruction based on the input event, where the graphic rendering instruction includes a rendering element of a target graphic; when rendering the target graphic based on the rendering element of the target graphic, re-rendering a first area that is in the first graphic and that needs to be re-rendered; synthesizing a re-rendered first area and a second area to obtain the target graphic, where the second area is an area that is in the first graphic and that does not need to be re-rendered; and displaying the target graphic.

In this embodiment of this application, when displaying the first graphic, if the electronic device needs to update the graphic, the electronic device may re-render only the first area that is in the first graphic and that needs to be re-rendered, and does not need to re-render the second area, that is, the area that is in the first graphic and that does not need to be re-rendered. This helps reduce a workload and improve graphic rendering efficiency.

In a possible design, the graphic rendering instruction includes a rendering element of the first area but does not include a rendering element of the second area.

In this embodiment of this application, after the electronic device detects the input event when displaying the first graphic, the graphic rendering instruction generated based on the input event may include only the rendering element of the first area that needs to be re-rendered. In this way, the electronic device may re-render only the first area that is in the first graphic and that needs to be re-rendered, and do not need to re-render another area, that is, the second area that is in the first graphic and that does not need to be re-rendered. This helps reduce a workload and improve graphic rendering efficiency.

In a possible design, the graphic rendering instruction includes a rendering element of each of all areas in the target graphic. Before the re-rendering a first area that is in the first graphic and that needs to be re-rendered, the electronic device further determines the first area based on a graphic rendering instruction of the target graphic and a graphic rendering instruction of the first graphic, where the graphic rendering instruction of the first graphic includes a rendering element of each of all areas in the first graphic.

In this embodiment of this application, the electronic device may determine, based on the graphic rendering instruction of the target graphic and the graphic rendering instruction of the first graphic, the first area that needs to be re-rendered, and then the electronic device may re-render only the first area in the first graphic, and do not need to re-render another area, that is, the second area that is in the first graphic and that does not need to be re-rendered. This helps reduce a workload and improve graphic rendering efficiency.

In a possible design, before the rendering the target graphic, the electronic device sets an area identifier of the first area in the first graphic to a first identifier, and sets an area identifier of the second area in the first graphic to a second identifier, where the first identifier is used to indicate that the first area needs to be re-rendered, and the second identifier is used to indicate that the second area does not need to be re-rendered. The re-rendering a first area that is in the first graphic and that needs to be re-rendered includes: re-rendering an area whose area identifier is the first identifier.

In this embodiment of this application, each area in the graphic corresponds to an area identifier, and the electronic device may separately set different area identifiers for the first area that is in the first graphic and that needs to be re-rendered and the second area that is in the first graphic and that does not need to be re-rendered. For example, the electronic device sets the area identifier of the first area to 1, and sets the area identifier of the second area to 0. In this way, when performing rendering, the electronic device may re-render only an area whose area identifier is 1, and does not render an area whose area identifier is 0. In this way, the workload is reduced and the efficiency is improved.

In a possible design, the graphic rendering instruction includes the rendering element of the first area, the rendering element includes a first texture identifier corresponding to the first area, and the re-rendering a first area that is in the first graphic and that needs to be re-rendered includes: determining, based on a correspondence between a texture identifier and texture, first texture corresponding to the first texture identifier; and re-rendering the first area based on the first texture.

In this embodiment of this application, a texture identifier is set for each texture, and the graphic rendering instruction generated by the electronic device includes the first texture identifier corresponding to the first area. When re-rendering the first area, the electronic device may re-render the first area based on the first texture corresponding to the first texture identifier. In this manner, the electronic device may re-render only the first area that is in the first graphic and that needs to be re-rendered, and does not need to re-render the second area, that is, the area that is in the first graphic and that does not need to be re-rendered. This helps reduce a workload and improve graphic rendering efficiency.

In a possible design, before the re-rendering the first area, the method further includes: determining a layer relationship between the first area and another area, where the another area is an area other than the first area in the target graphic; and the re-rendering the first area is specifically: re-rendering the first area when the layer relationship indicates that the first area is at a layer above the another area.

In this embodiment of this application, when the first area in the target graphic is at a layer above the another area, the electronic device may re-render the first area. If the first area is on a lower layer of the another area, the electronic device may not need to re-render the first area. This helps reduce a workload and improve efficiency.

In a possible design, the rendering element includes one or more of a display position, a size, a shape, and display content of each area.

It should be understood that the foregoing several examples are merely examples of rendering an element. This is not limited in this embodiment of this application.

According to a second aspect, an embodiment of this application further provides an electronic device. The electronic device includes a display, a memory, one or more processors, a plurality of applications, and one or more programs. The one or more programs are stored in the memory. When the one or more processors execute the one or more programs, the electronic device is enabled to implement the graphic rendering method provided in the first aspect.

According to a third aspect, an embodiment of this application further provides an electronic device. The electronic device includes a function module that can implement behavior of the electronic device in the possible implementations of the first aspect. These functional modules may be implemented by hardware, or may be implemented by hardware by executing corresponding software.

According to a fourth aspect, an embodiment of this application further provides a computer storage medium, including computer instructions. When the computer instructions are run on an electronic device, the electronic device is enabled to perform the graphic rendering method provided in the first aspect.

According to a fifth aspect, an embodiment of this application further provides a program product. When the program product runs on a computer, the computer is enabled to perform the graphic rendering method provided in the first aspect.

### BRIEF DESCRIPTION OF DRAWINGS

To describe the technical solutions in the embodiments of the present invention more clearly, the following briefly describes the accompanying drawings for describing the embodiments of the present invention. It is clearly that the accompanying drawings in the following description show merely some embodiments of the present invention, and a person of ordinary skill in the art may still derive other drawings from these accompanying drawings without creative efforts.
FIG. 1 is a schematic diagram of a user graphic interface according to an embodiment of this application;
FIG. 2 is a schematic diagram of a graphic rendering instruction according to an embodiment of this application;
FIG. 3 is a schematic diagram of a view tree according to an embodiment of this application;
FIG. 4 is a schematic diagram of a hardware structure of a mobile phone 100 according to an embodiment of this application;
FIG. 5 is a schematic diagram of a graphic rendering process in the conventional technology;
FIG. 6(a), FIG. 6(b), and FIG. 6(c) are schematic diagrams of user graphic interfaces according to an embodiment of this application;
FIG. 7 is a schematic diagram of a view according to an embodiment of this application;
FIG. 8 is a schematic diagram of a software architecture according to an embodiment of this application;
FIG. 9 is a schematic flowchart of a graphic rendering method according to an embodiment of this application;
FIG. 10 is a schematic structural diagram of a view tree and a displaylist tree according to an embodiment of this application;
FIG. 11 is a schematic structural diagram of a texture tree according to an embodiment of this application; and
FIG. 12 is a schematic flowchart of a graphic rendering method according to an embodiment of this application.

### DESCRIPTION OF EMBODIMENTS

The following describes the technical solutions in embodiments of this application with reference to the accompanying renderings in the embodiments of this application.

In the following, some terms in the embodiments of this application are described, to help a person skilled in the art have a better understanding.

A graphic in the embodiments of this application is a GUI displayed on a display of a terminal device, and includes a home screen (which may also be referred to as a desktop, for example, an interface shown in FIG. 1), a display interface of the leftmost screen, or a display interface of each application (application, app). The application in the embodiments of this application is a computer program that can implement one or more specific functions. Usually, a plurality of applications may be installed on the terminal device, such as a camera application, a messaging application, a multimedia messaging application, various email applications, WeChat (WeChat), Tencent QQ (QQ), WhatsApp Messenger, Line (Line), instagram (instagram), Kakao Talk, and Dingtalk. The following application may be an application built in the terminal device at delivery, or may be an application downloaded by a user from a network side in a process of using the terminal device. This is not limited in the embodiments of this application.

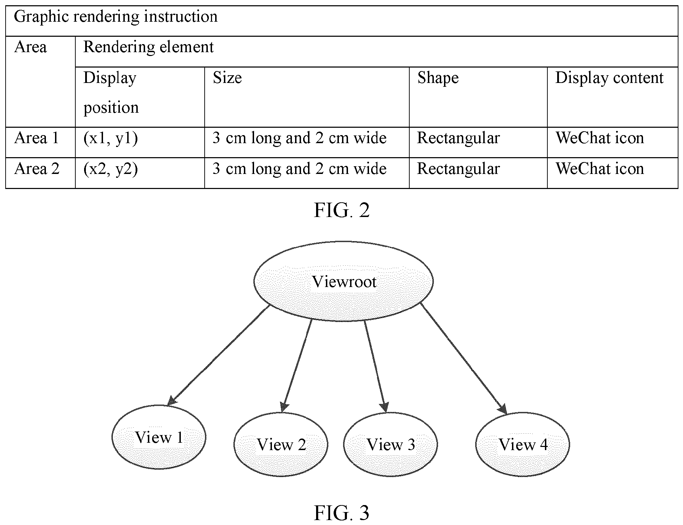

A graphic rendering instruction in the embodiments of this application is an instruction that is for rendering a graphic and that is generated by an application, and the terminal device may render the graphic according to the instruction. Different applications generate different graphic rendering instructions. For example, WeChat and Alipay generate different graphic rendering instructions. In addition, a same application may also generate different graphic rendering instructions. For example, an interface of Moments of WeChat is different from a chat interface of a contact in WeChat. Usually, the graphic rendering instruction includes a display area included in a GUI to be rendered and a rendering element of each area, for example, a display position, a size, a shape, and display content of each area. FIG. 2 shows a graphic rendering instruction of a GUI according to an embodiment of this application. The graphic rendering instruction is presented in a form of a table. For example, the graphic rendering instruction includes areas 1 to 3 and rendering elements of each area. In FIG. 2, an example in which the rendering elements of each area include a position, a size, a shape, and display content is used. In actual application, the rendering elements may further include other content, for example, information such as transparency.

It should be noted that the graphic rendering instruction generated by the application may alternatively be presented in a form other than a table, for example, a picture that is the same as the display interface shown in FIG. 1. In short, the graphic rendering instruction only needs to indicate a specific graphic to be rendered. This is not limited in the embodiments of this application.

It should be understood that, before generating the graphic rendering instruction, the terminal device may plan the GUI to be rendered, for example, divide the GUI into several areas, and determine a shape of each area, content to be displayed, and the like. Then the terminal device generates the graphic rendering instruction.

In an example, for a third-party application, for example, a WeChat application, the terminal device may receive a graphic rendering instruction sent by a third-party server corresponding to the application. In other words, in this example, the third-party server determines the GUI to be rendered. For example, the third-party server divides the GUI to be rendered into different areas, and determines the rendering element of each area, in other words, the graphic rendering instruction is generated by the third-party server and then delivered to the terminal device. The terminal device only needs to render a graphic based on the graphic rendering instruction.

For example, when the user sends WeChat Moments (uploading a picture) by using the WeChat application, the terminal device sends the picture uploaded by the WeChat application to a third-party server corresponding to the WeChat application. The third-party server determines, based on the picture uploaded by the user and a picture uploaded by another contact, a graphic rendering instruction of the GUI to be rendered, and delivers the instruction to the terminal device. The terminal device renders the GUI based on the graphic rendering instruction. The rendered GUI includes the picture uploaded by the user and the picture uploaded by the another contact.

In another example, for some applications, the terminal device may divide, based on an input operation of the user, the GUI to be rendered into different areas, determine the rendering element of each area, generate a graphic rendering instruction, render a graphic based on the graphic rendering instruction, and display the graphic.

For a view (view) in the embodiments of this application, as can be learned from the foregoing content, when rendering a GUI, the terminal device first renders graphics of different areas in the GUI, and then synthesizes the rendered graphs into one GUI. Therefore, when rendering the GUI, the terminal device may render the GUI by one view, in other words, one display area in the GUI corresponds to one view. The terminal device renders a graphic of each view, and then synthesizes the graphics of all views into one GUI. For details about a rendering process, refer to the following description.

In a view tree in this embodiment of this application, a plurality of views form a tree-like data structure. FIG. 3 is a schematic diagram of a view tree according to an embodiment of this application. Each node in the view tree represents one view, and one view may correspond to one display area.

In a rendering process, the terminal device may sequentially render graphics based on nodes of the view tree. For example, the terminal device first renders a graphic of a root node, and then renders graphics of other nodes. After rendering the graphics of the nodes, the terminal device synthesizes the graphics of the nodes into one GUI.

A graphic rendering process in the embodiments of this application includes two processes: outline rendering of a view and texture rendering (adding a picture to an outline). The outline rendering of the view includes rendering an outline based on a rendering element of the view in the graphic rendering instruction. The texture rendering process includes adding a picture to a rendered outline.

Texture in the embodiments of this application is a picture, that is, content added to an outline of each view. The texture rendering process in the embodiments of this application may be selecting a picture from rendered pictures, and then adding the picture to the rendered outline of the view; or rendering a new picture in real time and then adding the rendered outline of the view with the new picture.

"A plurality of' in the embodiments of this application indicates "at least two".

It should be noted that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects, if without special explanation. In the descriptions of the embodiments of the present invention, terms such as "first" and "second" are only used for distinction and description, but cannot be understood as indication or implication of relative importance, and cannot be understood as an indication or implication of a sequence.

The following describes a terminal device, a graphical user interface (graphical user interface, GUI) used for the terminal device, and embodiments for using the terminal device. In some embodiments of this application, the terminal device may be a portable terminal, such as a mobile phone, a tablet computer, or a wearable device (for example, a smartwatch) having a wireless communication function. The portable terminal includes a device that can perform graphic rendering, such as a central processing unit (central processing unit, CPU) and a graphics processing unit (graphics processing unit, GPU). An example embodiment of the portable terminal includes but is not limited to a portable terminal using iOS®, Android®, Microsoft®, or another operating system. The portable terminal may also be another portable terminal, provided that a graphic can be rendered. It should be further understood that in some other embodiments of this application, the terminal device may not be a portable terminal, but a desktop computer that can perform the graphic rendering process.

In some other embodiments of this application, the terminal device may not have a graphic rendering capability, but have a communication capability, for example, a component (such as an antenna, a wireless communications module, or a mobile communications module) that can perform communication. The terminal device sends a graphic rendering requirement to another device. The another device renders a graphic by using the graphic rendering method provided in this embodiment of this application, and then sends the rendered graphic to the terminal device. The terminal device displays the graphic.

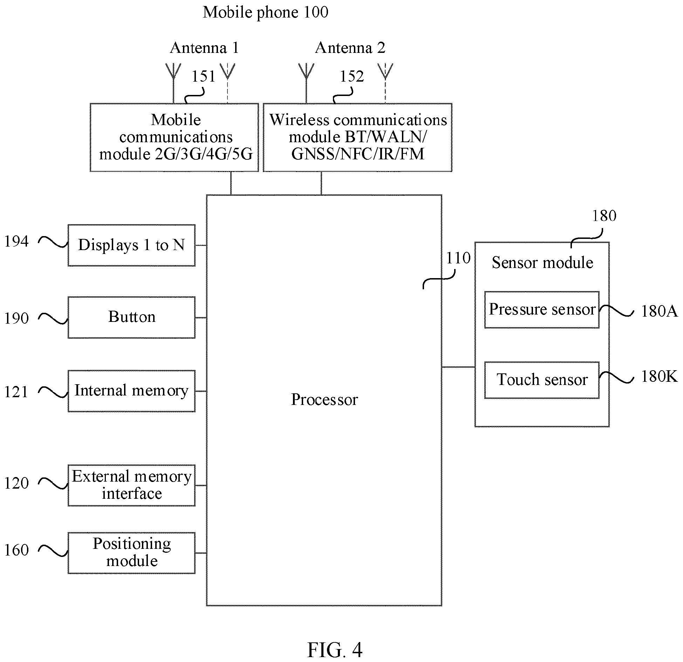

For example, the terminal device is a mobile phone. FIG. 4 is a schematic structural diagram of a mobile phone 100.

The mobile phone 100 may include a processor 110, an external memory interface 120, an internal memory 121, an antenna 1, an antenna 2, a mobile communications module 151, a wireless communications module 152, a sensor module 180, a button 190, a display 194, a positioning module 160, and the like. The sensor module 180 may include a touch sensor 180K and the like (the mobile phone 100 may further include other sensors such as a distance sensor, a fingerprint sensor, a temperature sensor, an ambient optical sensor, and a gyro sensor, which are not shown in FIG. 4).

It may be understood that the structure shown in this embodiment of this application does not constitute a specific limitation on the mobile phone 100. In some other embodiments of this application, the mobile phone 100 may include more or fewer components than those shown in FIG. 4, combine some components, split some components, or have different component arrangements. The components shown in FIG. 4 may be implemented by hardware, software, or a combination of software and hardware.

The following describes the components in the mobile phone 100 shown in FIG. 4.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve centre and a command center of the mobile phone 100. The controller may generate an operation control signal based on instruction operation code and a time sequence signal, to complete control of instruction reading and instruction execution.

A memory may be further disposed in the processor 110, and is configured to store an instruction and data. In some embodiments, the memory in the processor 110 is a high-speed cache memory. The memory may store an instruction or data just used or cyclically used by the processor 110. If the processor 110 needs to use the instruction or the data again, the processor 110 may directly invoke the instruction or the data from the memory. This avoids repeated access, reduces a waiting time period of the processor 110, and improves system efficiency.

The processor 110 may be configured to run code of the graphic rendering method provided in this embodiment of this application, to implement a graphic rendering process. A specific process is described below.

The internal memory 121 may be configured to store computer-executable program code. The executable program code includes an instruction. The processor 110 runs the instruction stored in the internal memory 121, to implement various function applications of the mobile phone 100 and data processing. The internal memory 121 may include a program storage area and a data storage area. The program storage area may store software code of an operating system and an application (such as a WeChat application and a camera application). The data storage area may store personal data (such as a picture or a video taken by the camera application) created during use of the mobile phone 100.

The internal memory 121 may further store software code used to perform the graphic rendering method. When running the code, the processor 110 implements a function of the graphic rendering process. The internal memory 121 may be further configured to store texture (namely, a picture).

The internal memory 121 may include a high-speed random access memory, and may further include a nonvolatile memory, for example, at least one magnetic disk storage device, a flash memory device, or a universal flash storage (universal flash storage, UFS).

The positioning module 160 is configured to position a current geographical position of the mobile phone 100. A positioning method used by the positioning module 160 may be one or more of methods such as GPS, a base station, a Wi-Fi hotspot, Bluetooth (iBacon), and assisted GPS (assisted GPS, AGPS).

The external memory interface 120 is configured to connect an external memory to the mobile phone 100. The external memory includes an external memory card (SD memory card), a NAS storage device, and the like. This is not limited in this embodiment of this application. To save storage space of the internal memory 121, the mobile phone 100 may also store, in the external memory, software code, texture (namely, a picture), and the like that are used to perform a graphic rendering method. The processor 110 may access, through the external memory interface 120, data stored in the external memory.

The following describes functions of the sensor module 180.

The touch sensor 180K is also referred to as a "touch panel", The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. Visual output related to the touch operation may be provided by using the display 194. In some other embodiments, the touch sensor 180K may alternatively be disposed on a surface of the mobile phone 100 and is at a position different from that of the display 194.

That the touchscreen of the mobile phone 100 displays a home screen is used as an example. The home screen includes icons of a plurality of applications, such as a camera application, a setting application, a WeChat application, and a QQ application. The touch sensor 180K may detect a touch operation of a user on the touchscreen, and send the touch operation to the processor 110. The processor 100 may determine, based on the touch operation, an icon corresponding to the touch operation, in other words, determine an application to be tapped by the user. If the processor 110 determines, based on the touch operation, that the user taps the WeChat application, the processor 110 renders an application interface of WeChat by using the graphic rendering method provided in this embodiment of this application, and the mobile phone 100 displays the rendered application interface of WeChat.

Similarly, the mobile phone 100 may further receive an input operation by using the button 190, and send the input operation to the processor 110. The processor 110 determines an icon corresponding to the input operation, for example, the WeChat application. The processor 110 renders the application interface of the WeChat application by using the graphic rendering method provided in this embodiment of this application, and the mobile phone 100 displays the rendered application interface of the WeChat application.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the mobile phone 100 may include one or N displays 194, where N is a positive integer greater than 1.

The display 194 is configured to display a home screen, a display interface of an application, or the like.

A wireless communication function of the mobile phone 100 may be implemented by using the antenna 1, the antenna 2, the mobile communications module 151, the wireless communications module 152, the modem processor, the baseband processor, and the like.

The antenna 1 and the antenna 2 are configured to: transmit and receive electromagnetic wave signals. Each antenna in the electronic device 100 may be configured to cover one or more communications frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 151 may provide a wireless communication solution that is applied to the electronic device 100 and that includes 2G/3G/4G/5G and the like. The mobile communications module 151 may include at least one filter, a switch, a power amplifier, a low noise amplifier (low noise amplifier, LNA), and the like. The mobile communications module 151 may receive an electromagnetic wave through the antenna 1, perform processing such as filtering or amplification on the received electromagnetic wave, and transmit a processed electromagnetic wave to the modem processor for demodulation. The mobile communications module 151 may further amplify a signal modulated by the modem processor, and convert the signal into an electromagnetic wave for radiation through the antenna 1. In some embodiments, at least some function modules of the mobile communications module 151 may be disposed in the processor 110. In some embodiments, at least some function modules of the mobile communications module 151 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 151 or another function module.

The wireless communications module 152 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technique. The wireless communications module 152 may be one or more components integrated into at least one communications processing module. The wireless communications module 152 receives an electromagnetic wave through the antenna 2, performs frequency modulation and filtering processing on an electromagnetic wave signal, and sends a processed signal to the processor 110. The wireless communications module 152 may further receive a to-be-sent signal from the processor 110, perform frequency modulation and amplification on the signal, and convert the signal into an electromagnetic wave for radiation through the antenna 2.

If the mobile phone 100 does not have a graphic rendering capability or current service pressure of the terminal device is relatively high (for example, there are a relatively large quantity of applications running in the background, and current remaining power is relatively low), the mobile phone 100 may send a graphic rendering instruction to another device by using the wireless communications module 152 or the mobile communications module 151. The another device renders a graphic according to the graphic rendering method provided in the embodiments of this application. The mobile phone 100 may receive, by using the wireless communications module 152 or the mobile communications module 151, the rendered graphic sent by the another device, and the terminal device displays the graphic.

Although not shown in FIG. 4, the mobile phone 100 may further include a camera lens, for example, a front-facing camera lens and a rear-facing camera lens. The mobile phone 100 may further include a motor, configured to generate a vibration prompt (for example, an incoming call vibration prompt). The mobile phone 100 may further include an indicator, for example, an indicator lamp, configured to indicate a charging state or a battery change, or may be configured to indicate a message, a missed call, a notification, or the like. In addition, the mobile phone 100 may further include an audio module (a speaker, a receiver, a microphone, a headset interface), and the like. Details are not described in this embodiment of this application.

The following describes a background technology related to this application.

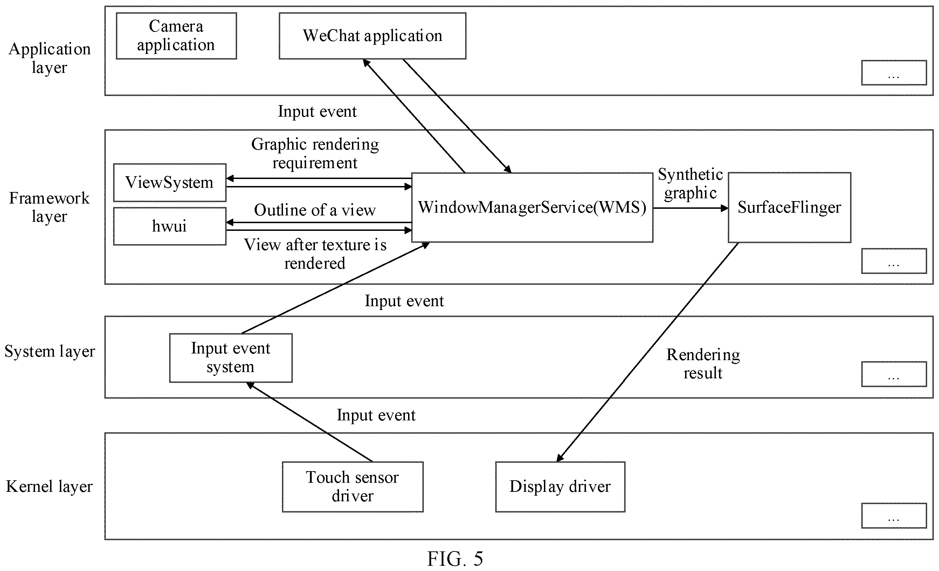

FIG. 5 is a schematic diagram of a graphic rendering process in the conventional technology. In FIG. 5, an example in which a terminal device is the mobile phone 100 and an Android system is used. As shown in FIG. 5, a software architecture of the mobile phone 100 mainly includes four layers from bottom to top: a kernel (kernel) layer, a system layer, a framework (framework) layer, and an application (application) layer.

The kernel layer mainly contains drivers of input and output devices. The output device may include a display, a loudspeaker, and the like. The input device may include a sensor (for example, a touch sensor), a keyboard, a microphone, and the like. The input device at the kernel layer may collect a user input event, and then send an input operation to an upper layer (namely, the system layer) for processing. For example, FIG. 5 shows only a touch sensor driver and a display driver, but this is not limited to the touch sensor driver and the display driver.

The system layer includes an input event system, configured to distribute an input event sent by the kernel layer to an upper layer, namely, the framework layer.

The framework layer mainly includes a window manager service (window manager service, WMS), a surfaceFlinger (surfaceflinger), a viewSystem (viewsystem), and a hardware user interface (hardware user interface, hwui for short).

The WMS stores position information and the like of a clickable area (for example, a control) in each GUI. Therefore, when the system layer sends the input event to the framework layer, the WMS can correctly determine a control corresponding to the input event. The WMS is further configured to receive a graphic rendering instruction delivered by an application at an upper layer, namely, the application layer. The graphic rendering instruction carries a rendering element (for example, a table shown in FIG. 2) of each area in the GUI. The WMS requests the viewsystem and hwui to render the GUI.

The viewsystem is used to construct a view tree and render each view in the view tree based on the view tree. It can be learned from the foregoing content that, one view is used as an example, a rendering process of the view includes two processes, a first process is to render a view outline, and a second process is to add a picture to the outline (in other words, a texture rendering process). The viewsystem may perform the first process, in other words, render an outline of a view based on a rendering element of the view.

The hwui is used to perform the second process, in other words, to render texture for each view, in other words, to add a picture to the outline of each view.

The WMS is also used to merge the views rendered by the hwui into a GUI. The surfaceFlinger is configured to deliver the synthesized GUI to a lower layer, namely, the system layer, and the system layer sends the synthesized GUI to the kernel layer. For example, the system layer sends the synthesized GUI to the display driver at the kernel layer, to drive the display 194 to display the GUI.

The application layer includes various applications, such as WeChat, QQ, a camera, and an album. Each application at the application layer may determine how to display the display interface. For example, WeChat may determine how to display a display interface of WeChat.

The following uses a WeChat application as an example to describe the graphic rendering process.

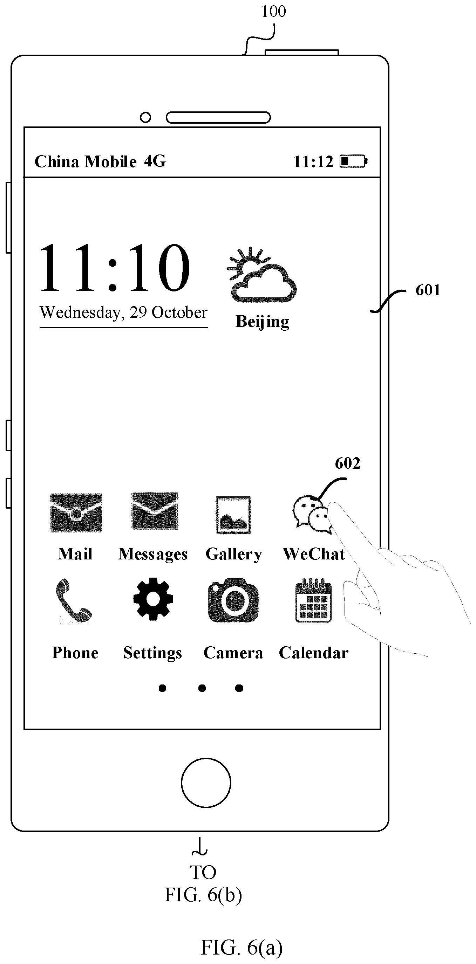

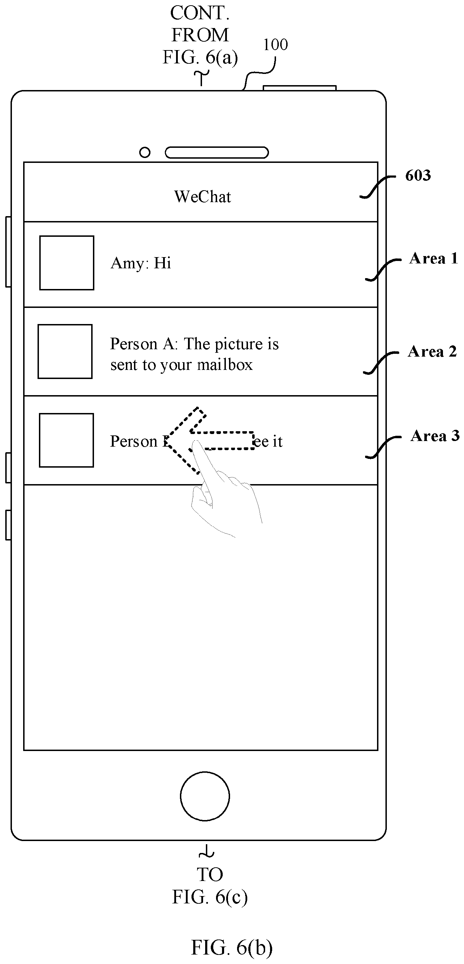

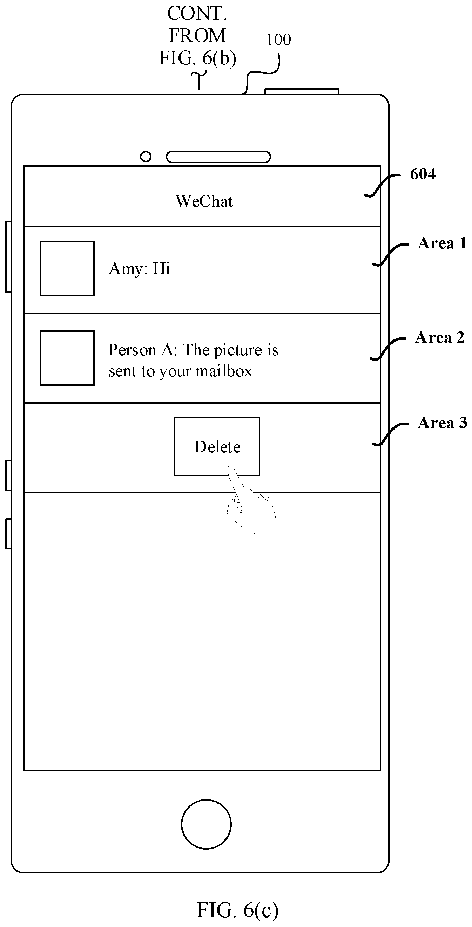

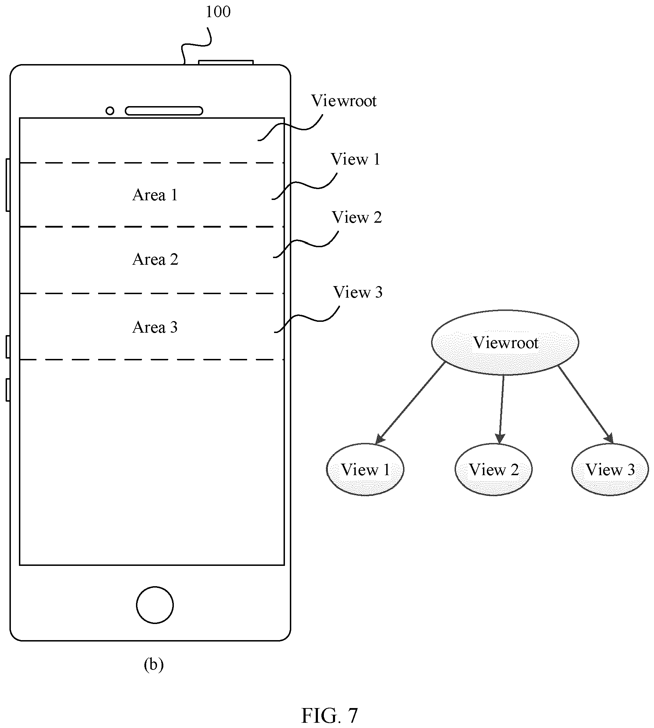

FIG. 6(a), FIG. 6(b), and FIG. 6(c) are schematic diagrams of user graphic interfaces according to an embodiment of this application. Referring to FIG. 6(a), the mobile phone 100 displays a home screen 601, and the home screen 601 includes icons of a plurality of applications, including an icon 602 of the WeChat application. When detecting an operation of triggering the WeChat icon 602 by a user, the mobile phone 100 displays a display interface 603 shown in FIG. 6(b). When detecting a left sliding operation performed by the user on the interface 603, the mobile phone 100 displays an interface 604 shown in FIG. 6(c). The following describes a process of rendering the interface 604 shown in FIG. 6(c) by using the software architecture in the conventional technology shown in FIG. 5.
(1) The touch sensor driver sends a detected input event (for example, detects the left sliding operation, time, position coordinates, and the like in the interface 603 shown in FIG. 6(b)) to the input event system at the system layer. The input event system sends the input event to the WMS at the framework layer. The WMS may store coordinates of each touch area in the current display interface (namely, the interface 603 in FIG. 6(b)). Therefore, the WMS may compare the position coordinates of the left sliding operation in the input event with the stored coordinates of touch areas, to determine a touch area corresponding to the input event. In this case, the WMS may report the input event and the touch area corresponding to the input event to the WeChat application at the application layer.
(2) In response to the input event, the WeChat application sends a graphic rendering instruction to the WMS, where the graphic rendering instruction carries rendering elements of different areas, in other words, the WeChat application notifies the WMS of the display interface to be rendered.
(3) The WMS sends the graphic rendering instruction to the viewsystem. The viewsystem constructs a view tree based on the graphic rendering instruction. Specifically, when the viewsystem constructs the view tree, a position relationship between different views may be considered. FIG. 7 is a schematic diagram of constructing the view tree in the viewsystem. As shown in FIG. 7, a view 1 corresponds to an area 1, a view 2 corresponds to an area 2, and a view 3 corresponds to an area 3. The view 1, the view 2, and the view 3 are all located in a background. Therefore, the background can be used as an independent view, namely, a viewroot. In addition, the view 1, the view 2, and the view 3 can be used as subnodes of the viewroot. If the view 1, the view 2, and the view 3 do not overlap in positions, the view 1, the view 2, and the view 3 can be independent nodes, and the view 1, the view 2, and the view 3 can be at the same layer.
(4) The viewsystem renders the outline of each view based on the rendering element of each area in the graphic rendering instruction. The view 1 is used as an example. The viewsystem renders an outline of the view 1 based on the rendering element (including a display position, a shape, and the like) of the view 1. The viewsystem sends the rendered outline of each view to the WMS.
(5) The WMS sends the view whose outline is rendered to the hwui, and the hwui renders texture for the outline of each view, in other words, adds a picture. The view 1 (the area 1) is used as an example. The picture added by the hwui includes an avatar, text and the like. After rendering the texture for each view, the hwui sends the views after the texture is rendered to the WMS. The WMS synthesizes the views after the texture is rendered into a GUI and sends the GUI to the surfaceFlinger. The surfaceFlinger delivers the synthesized GUI to the system layer, and the system layer delivers the synthesized GUI to the display driver, to drive the display 194 to display the GUI.

According to the foregoing process, the mobile phone 100 implements a process of switching from the interface 603 shown in FIG. 6(b) to the interface 604 shown in FIG. 6(c).

It can be learned that, in the conventional technology, each time an application updates a GUI, the mobile phone 100 needs to re-render texture of each view. However, it can be learned by comparing FIG. 6(b) and FIG. 6(c) that, only the area 3 (corresponding to the view 3) changes in the display interface 603 and the display interface 604, and the area 1 (corresponding to the view 1) and the area 2 (corresponding to the view 2) do not change. According to the graphic rendering process in the conventional technology, even if the view 1 and the view 2 do not need to be updated, the mobile phone 100 still re-renders texture of the view 1 and the view 2. It can be learned that efficiency of the graphic rendering process in the conventional technology is relatively low, and when texture of more views needs to be rendered, higher power consumption is consumed. It can be learned that the graphic rendering process in the conventional technology consumes higher power consumption.

An embodiment of this application provides a graphic rendering method. In the method, when some views in a GUI need to be updated, and some views do not need to be updated, the mobile phone 100 may render only texture of the views that need to be updated. This helps reduce power consumption and improve efficiency.

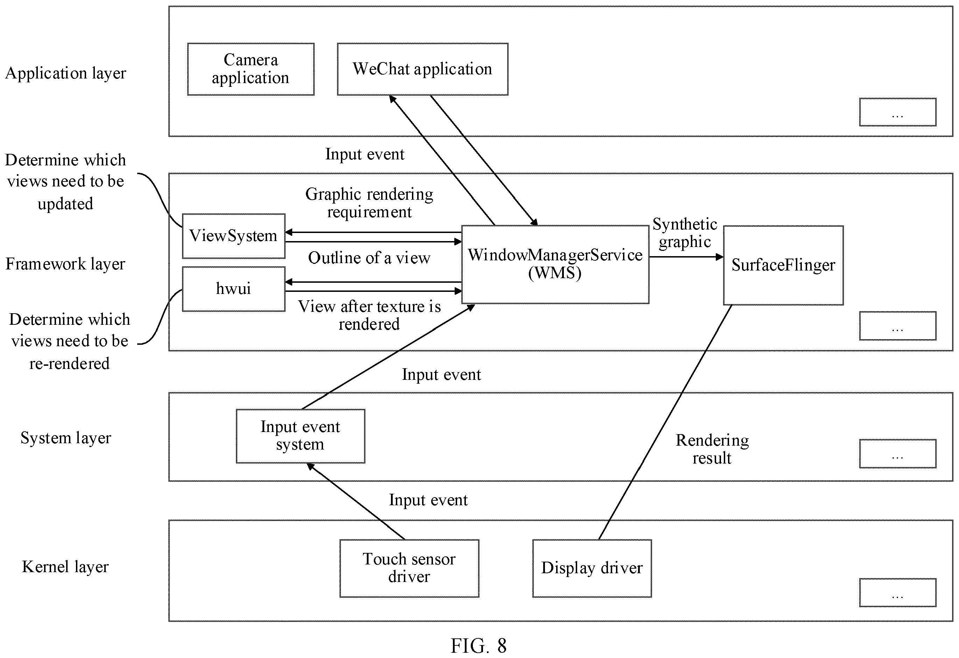

FIG. 4 is a schematic diagram of a hardware architecture of a mobile phone 100 according to an embodiment of this application. Correspondingly, FIG. 8 is a schematic diagram of a software architecture of the mobile phone 100 according to an embodiment of this application. As shown in FIG. 8, the software architecture of the mobile phone 100 mainly includes four layers from bottom to top: a kernel (kernel) layer, a system layer, a framework (framework) layer, and an application (application) layer. Compared with the software architecture shown in FIG. 4, the software architecture shown in FIG. 8 may achieve an objective of rendering only texture of a view that is updated, and does not need to render texture of a view that is not updated. For example, before rendering the texture of the view, the hwui can be added with a function of determining specific views that need to be rendered and specific views that do not need to be rendered. Of course, other software modules can be also added with corresponding functions. For details, refer to the following sections.

It should be understood that functions of the kernel layer, the system layer, the framework layer, and the application layer in FIG. 8 are the same as those in content shown in FIG. 5. Details are not described herein again.

The following describes several implementation processes of rendering the display interface 604 in FIG. 6(c) according to the graphic rendering method provided in the embodiments of this application.

It should be noted that FIG. 4 shows a hardware architecture according to an embodiment of this application. FIG. 8 shows a software architecture according to an embodiment of this application. A software program and/or a module corresponding to the software architecture in FIG. 8 are/is stored in the internal memory 121, and the processor 110 runs the software program stored in the internal memory 121 to execute a corresponding graphic rendering process.

A first possible graphic rendering process includes:
(1) The touch sensor driver sends the detected input event (for example, the left sliding operation in the interface 603 shown in FIG. 6(b)) to the input event system at the system layer. The input event system sends the input event to the WMS at the framework layer. The WMS distributes the input event to WeChat.
(2) WeChat sends a graphic rendering instruction to the WMS based on the input event, where the graphic rendering instruction includes only a rendering element of the area 3 (includes a display position, display content, a shape, a size, and the like of the area 3).
(3) The WMS sends the graphic rendering instruction to the viewsystem. The viewsystem determines that a view corresponding to the area 3 is a view 3. The viewsystem does not need to reconstruct the view tree, but only renders an edge outline of the view 3 based on the rendering element of the view 3.
(4) The viewsystem sends the view 3 with the rendered edge outline to the WMS. The WMS sends the view 3 with the rendered edge outline to the hwui.
(5) The hwui receives only the outline of the view to be updated. Therefore, the hwui may render the texture of the view. The hwui may add a picture to the outline of the view 3 based on the rendering element (for example, the display content) of the view 3. The hwui sends the view 3 obtained after the texture is rendered to the WMS. The WMS synthesizes the view 3 obtained after the texture is rendered and the original views (including the original view 1 and the original view 2) into a GUI, and delivers the GUI to the display driver by using the surfaceflinger. The display 194 displays the GUI.

In the first implementation process, WeChat in the mobile phone 100 may determine an area that needs to be updated (WeChat determines, based on the user input event, how to update the display interface, and therefore, WeChat may determine areas that need to be updated in the current display interface). WeChat only needs to deliver a rendering element of the area that needs to be updated to the WMS. The WMS may continue to send the rendering element of the area that needs to be updated to the viewsystem. The viewsystem determines a view corresponding to the area that needs to be updated, and renders an outline of only the view. The hwui also renders texture of only the view. In this process, only the rendering element of the view that needs to be updated is transferred among WeChat, the WMS, the viewsystem, and the hwui, so that the hwui does not need to determine which views require texture rendering and which views do not require texture rendering, because the WMS sends only the view that needs to be updated to the hwui, and does not send a view that does not need to be updated to the hwui. This process helps reduce power consumption and improve efficiency.

It should be noted that, when the processor 110 in FIG. 4 is integrated with a plurality of processors, all the foregoing five processes may be executed by a same processor, or may be executed by different processors. For example, the processor 110 integrates a CPU and a GPU. The foregoing processes (1) to (4) may be executed by the CPU, and the process (5) may be executed by the GPU. In other words, a process of rendering the texture of the view is executed by the GPU. Specifically, when completing the process (4), the CPU may send an instruction to the GPU, where the instruction is used to instruct the GPU to execute the process (5).

A second possible graphic rendering process includes:
(1) The touch sensor driver sends the detected input event (for example, the left sliding operation on the interface 603 shown in FIG. 6(b)) to the input event system at the system layer. The input event system sends the input event to the WMS at the framework layer. The WMS distributes the input event to the WeChat application.
(2) The WeChat application sends a graphic rendering instruction to the WMS, where the graphic rendering instruction includes a rendering element of each area. For example, the graphic rendering instruction includes a rendering element of each of an area 1, an area 2, and an area 3.
(3) The WMS compares the graphic rendering instruction with a previous graphic rendering instruction delivered by the WeChat application, and determines areas that need to be updated and areas that do not need to be updated.
(4) The WMS sends the rendering element of the area that needs to be updated to the viewsystem. The viewsystem re-renders an edge outline of a view (a view 3) corresponding to the area that needs to be updated. Outlines of a view 1 and a view 2 do not need to be re-rendered.
(5) The viewsystem sends the view 3 whose outline is rendered to the WMS. The WMS sends the view 3 with the rendered outline to the hwui.
(6) The hwui renders texture of the view 3. The hwui sends the view 3 after the texture is rendered to the WMS, and the WMS synthesizes other views (the original view 1 and the original view 2) and the re-rendered view 3 into a GUI, and delivers the GUI to the display driver by using the surfaceflinger. The display 194 displays the GUI.

In a second implementation process, the graphic rendering instruction delivered by the WeChat application to the WMS includes a rendering element of each area, and the WMS determines areas that need to be updated and areas that do not need to be updated in a new display interface relative to the current display interface. The WMS sends the rendering element of the area that needs to be updated to the viewsystem. The viewsystem determines a view corresponding to the area that needs to be updated and renders only an outline of the view. The hwui also renders only texture of the view. In this process, only information about the views that need to be updated is transmitted among the WMS, the viewsystem, and the hwui, so that the hwui does not need to determine which views require texture rendering and which views do not require texture rendering, because the WMS sends only the views that need to be updated to the hwui, and does not send the views that do not need to be updated to the hwui. This process helps reduce power consumption and improve efficiency.

It should be noted that, when the processor 110 in FIG. 4 is integrated with a plurality of processors, all the foregoing six processes may be executed by a same processor, or may be executed by different processors. For example, the processor 110 integrates a CPU and a GPU. The foregoing processes (1) to (5) may be executed by the CPU, and the process (6) may be executed by the GPU. In other words, a process of rendering the texture of the view is executed by the GPU. Specifically, when completing the process (5), the CPU may send an instruction to the GPU, where the instruction is used to instruct the GPU to execute the process (6).

A third possible graphic rendering process includes the following steps.
(1) The touch sensor driver sends the detected input event (for example, the left sliding operation shown in FIG. 6(b)) to the input event system at the system layer. The input event system sends the input event to the WMS at the framework layer. The WMS distributes the input event to the WeChat application.
(2) The WeChat application sends a graphic rendering instruction to the WMS based on the input event, where the graphic rendering instruction includes a rendering element of each area. For example, the graphic rendering instruction includes a rendering element of each of an area 1, an area 2, and an area 3. The WMS sends the graphic rendering instruction to the viewsystem.
(3) The viewsystem compares the graphic rendering instruction with a previous graphic rendering instruction delivered by the WeChat application, and determines areas that need to be updated and areas that do not need to be updated. The viewsystem re-renders an outline of a view (a view 3) corresponding to the area that needs to be updated. Outlines of a view 1 and a view 2 do not need to be re-rendered. The viewsystem sends the re-rendered outline of the view 3 to the hwui.
(4) Because the hwui receives only the outline of the view 3 that is sent by the viewsystem, the hwui may only re-render texture of the view 3, and send the view 3 after the texture is rendered to the WMS. The WMS synthesizes other views (the view 1 and the view 2) and the view 3 after the texture is rendered into a GUI, and delivers the GUI to the display driver by using the surfaceflinger. The display 194 displays the GUI.

In a third implementation process, the graphic rendering instruction delivered by the WeChat application to the WMS includes the rendering element of each area, and the WMS sends the graphic rendering instruction to the viewsystem. The viewsystem determines areas that need to be updated and areas that do not need to be updated in a new display interface relative to the current display interface, and then notifies the hwui of the areas that need to be updated. The hwui may render only texture of the areas that need to be updated. This process helps reduce power consumption and improve efficiency.

It should be noted that, when the processor 110 in FIG. 4 is integrated with a plurality of processors, all the four processes in the third graphic rendering process may be executed by a same processor, or may be executed by different processors. For example, the processor 110 integrates a CPU and a GPU. The foregoing processes (1) to (3) may be executed by the CPU, and the process (4) may be executed by the GPU. In other words, a process of rendering the texture of the view is executed by the GPU. Specifically, when completing the process (3), the CPU may send an instruction to the GPU, where the instruction is used to instruct the GPU to execute the process (4).

A fourth possible graphic rendering process includes:
(1) The touch sensor driver sends the detected input event (for example, the left sliding operation shown in FIG. 6(b)) to the input event system at the system layer. The input event system sends the input event to the WMS at the framework layer. The WMS distributes the input event to the WeChat application.
(2) The WeChat application sends a graphic rendering instruction to the WMS based on the input event, where the graphic rendering instruction includes a rendering element of each area. For example, the graphic rendering instruction includes a rendering element of each of an area 1, an area 2, and an area 3. The WMS sends the graphic rendering instruction to the viewsystem.
(3) The viewsystem compares the graphic rendering instruction with a previous graphic rendering instruction delivered by the WeChat application, and determines areas that need to be updated and areas that do not need to be updated. The viewsystem re-renders an outline of a view (a view 3) corresponding to the area that needs to be updated. Outlines of a view 1 and a view 2 do not need to be re-rendered. The viewsystem sets a flag of the view that needs to be updated in the previous graphic to 1, and sets flags of other views to 0.
(4) The viewsystem needs to render only an outline of the view whose flag is 1, and does not need to render an outline of the view whose flag is 0, and then sends outlines of all views (a view 1, a view 2, and a view 3) to the hwui.
(5) The hwui determines which views need to be updated and which views do not need to be updated. For example, if the hwui determines that the view whose flag is 1 needs to be updated, the hwui renders texture only for the view whose flag is 1, and does not need to render texture for other views. The hwui sends the view 3 after the texture is rendered and other views (the view 1 and the view 2) to the WMS. The WMS synthesizes the other views (the view 1 and the view 2) and the view 3 after the texture is rendered into a GUI, and delivers the GUI to the display driver by using the surfaceflinger. The display 194 displays the GUI.

In a fourth implementation process, the graphic rendering instruction delivered by the WeChat application to the WMS includes the rendering element of each area, and the WMS sends the graphic rendering instruction to the viewsystem. The viewsystem determines which areas in the new display interface need to be updated and which areas do not need to be updated in a new display interface relative to the current display interface. The viewsystem determines a view corresponding to the area that needs to be updated, sets a flag of the view to 1, and sets flags of other views to 0. Therefore, the hwui can determine which views need to be re-rendered and which do not need to be re-rendered based on the flag (for example, the view whose flag is 1 needs to be updated, and the view whose flag is 0 does not need to be updated). In this way, the hwui can render only the texture of the updated view. This process helps reduce power consumption and improve efficiency.

It should be noted that, when the processor 110 in FIG. 4 is integrated with a plurality of processors, all the five processes in the fourth graphic rendering process may be executed by a same processor, or may be executed by different processors. For example, the processor 110 integrates a CPU and a GPU. The foregoing processes (1) to (4) may be executed by the CPU, and the process (5) may be executed by the GPU. In other words, a process of rendering the texture of the view is executed by the GPU. Specifically, when completing the process (4), the CPU may send an instruction to the GPU, where the instruction is used to instruct the GPU to execute the process (5).

It should be understood that the foregoing merely lists four possible graphic rendering processes. In actual application, there may be another implementation process, or steps in the foregoing four possible graphic rendering processes may be randomly combined and combined to implement different effects.

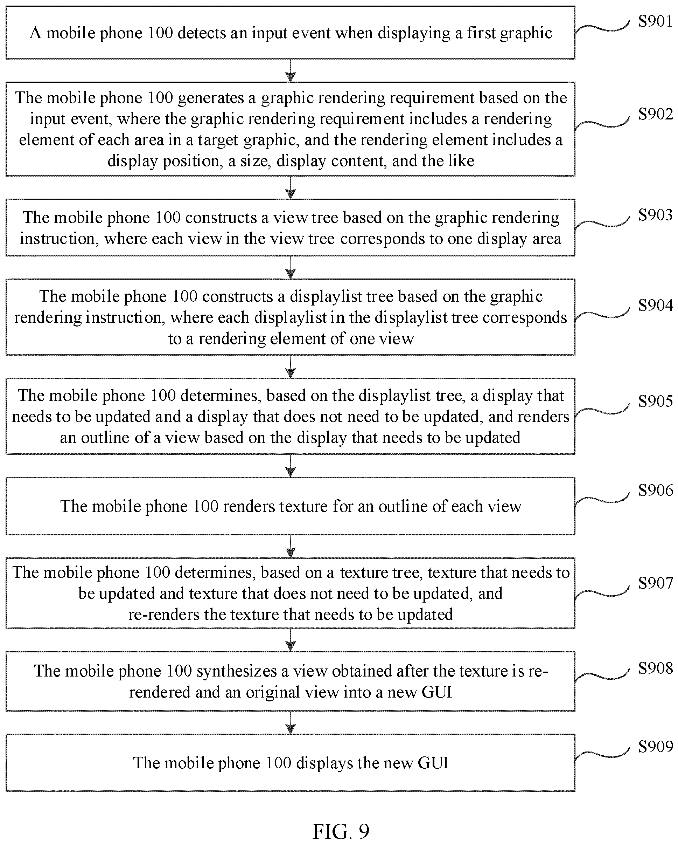

The following uses the third implementation as an example to describe a graphic rendering process provided in the embodiments of this application. FIG. 9 is a schematic flowchart of graphic rendering according to an embodiment of this application. As shown in FIG. 9, a process of the method includes the following steps.

S901: A mobile phone 100 detects an input event when displaying a first graphic.

For example, the software architecture shown in FIG. 8 is used as an example, the mobile phone 100 may detect the input event by using an input device (a touch sensor, a button, or the like), and then report the input event to an application at an application layer. A specific process has been described in the foregoing content. Details are not described in this embodiment of this application.

S902: The mobile phone 100 generates a graphic rendering instruction based on the input event, where the graphic rendering instruction includes a rendering element of each area in a target graphic, and the rendering element includes a display position, a size, display content, and the like.

Usually, after detecting the input event, the mobile phone 100 may respond to the input event, for example, update a display interface.

For example, the software architecture shown in FIG. 8 is used as an example. After the mobile phone 100 reports the input event to the application at the application layer, the application determines to generate the graphic rendering instruction. In other words, the application determines a GUI to be displayed.

S903: The mobile phone 100 constructs a view tree based on the graphic rendering instruction, where each view in the view tree corresponds to one display area.

It can be learned from the foregoing content that the graphic rendering instruction includes a display area included in the GUI (namely, the target graphic) to be rendered. Therefore, the mobile phone 100 may construct the view tree based on the display area included in the target graphic, and each view in the view tree corresponds to one display area.

Specifically, when constructing the view tree, the mobile phone 100 may set a view ID for each view, to uniquely identify each view, and set a flag (flag) for each view, where the flag is 1 or 0. When the flag is 1, it indicates that the view needs to be updated. When the flag is 0, it indicates that the view does not need to be updated.

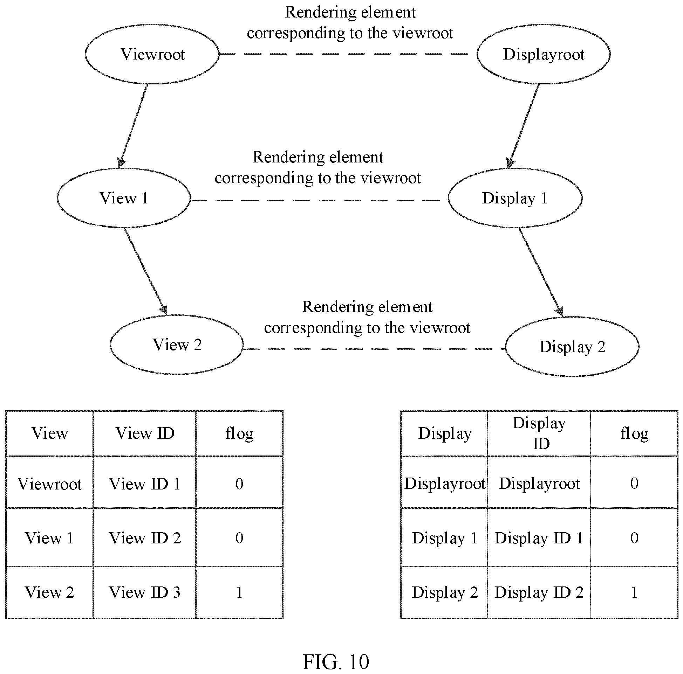

FIG. 10 shows a view tree and a table of related information (a view ID and a flag) corresponding to each view in the view tree according to an embodiment of this application (also, a form of the table is not limited in this application, and another form may be alternatively used).

In an example, if the graphic rendering instruction is generated for the first time, a flag of each view is 1 by default. In other words, each view needs to be rendered.

For example, if the mobile phone 100 does not run WeChat in the background, the mobile phone 100 starts WeChat when detecting an operation of tapping a WeChat icon on a home screen by a user, as shown in FIG. 6(a) and FIG. 6(b). In other words, WeChat generates the graphic rendering instruction for the first time. Therefore, a flag of each view in the view tree constructed by the mobile phone 100 is 1. After the mobile phone 100 renders the GUI based on the graphic rendering instruction generated for the first time, the mobile phone 100 may update the flag of each view from 1 to 0. In a subsequent process, a flag of a view that needs to be updated is changed from 0 to 1.

S904: The mobile phone 100 constructs a displaylist tree based on the graphic rendering instruction, where each displaylist in the displaylist tree corresponds to a rendering element of one view.

Usually, if a view needs to be updated, a rendering element of the view is updated. For ease of processing, after constructing the view tree, the mobile phone 100 may construct the display list tree. Each display in the display list tree is used to indicate a rendering element of one view.

Continuing to refer to FIG. 10, each node in the display list tree corresponds to each node in the view tree. For example, a displayroot corresponds to a viewroot, a display 1 corresponds to a view 1, and a display 2 corresponds to a view 2. In other words, the display 1 is a rendering element of the view 1, and the display 2 is a rendering element of the view 2.

Continuing to refer to a display table shown in FIG. 10, a display list ID is set for each display in the display list tree. One display list ID corresponds to a view ID of one view in the view tree, and a flag is set for each display, where the flag is 1 or 0. When the flag is 1, it indicates that the rendering element of the view is updated. When the flag is 0, it indicates that the rendering element of the view is not updated.

It should be noted that, when a view in the view tree needs to be updated, the mobile phone 100 sets a flag of the view in the view tree to 1, and correspondingly, sets a flag of a display ID corresponding to the view in the display list tree to 1. For example, referring to FIG. 10, when the view 2 needs to be updated, the mobile phone 100 sets a flag of the view 1 to 0, and sets a flag of the view 2 to 1. Correspondingly, the mobile phone 100 sets a flag of the display 1 to 0, and sets a flag of the display 2 to 1.

It should be noted that, when the display area in the graphic rendering instruction delivered by the application does not change, for example, there are three areas in both FIG. 6(a) and FIG. 6(b), and only display content in an area 3 changes, in this embodiment of this application, the mobile phone 100 may not need to reconstruct a view tree, but only needs to indicate that a rendering element of a view 3 changes, that is, only needs to set a flag of a display ID 3 in the display list tree to 1, that is, indicate that the display ID 3 corresponding to a view ID 3 changes.

S905: The mobile phone 100 determines, based on the displaylist tree, a display that is to be updated and a display that is not to be updated, and renders an outline of a view corresponding to the display that is to be updated.

Referring to FIG. 10, the mobile phone 100 may determine, in the display table, a display whose flag is 1, namely, the display 2. The mobile phone 100 renders an outline of the view 2 based on the rendering element indicated by the display 2, and does not need to re-render an outline of another view.

S906: The mobile phone 100 renders texture for the outline of the view corresponding to the display that is to be updated.

It should be noted that the mobile phone 100 may construct a texture tree after rendering an outline of each view and adding a picture to each outline based on a previous graphic rendering instruction. If FIG. 6(b) is used as an example, in a process in which the mobile phone 100 renders, based on the graphic rendering instruction corresponding to FIG. 6(b), the display interface 603 shown in FIG. 6(b), the mobile phone 100 may construct the texture tree. Each node in the texture tree corresponds to one texture ID, and each node includes texture (a picture) added to a view corresponding to the node.

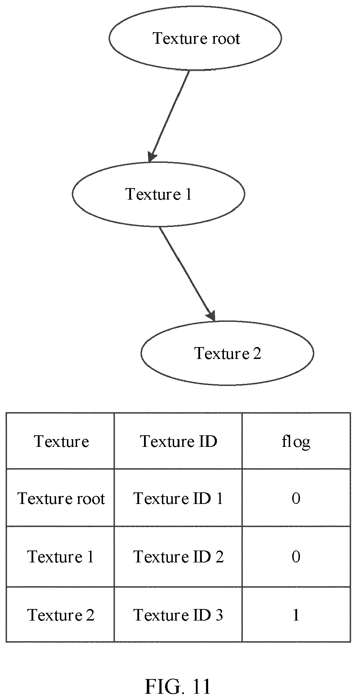

FIG. 11 is a schematic diagram of a texture tree according to an embodiment of this application. Each node in the texture tree corresponds to each node in the displaylist tree, and further corresponds to each node in the view tree. For example, a texture root corresponds to the displayroot, and further corresponds to the viewroot. Texture 1 corresponds to the display 1, and further corresponds to the view 1. Texture 2 corresponds to the display 2, and further corresponds to the view 2. In other words, the texture 1 is a picture added to the view 1, and the texture 2 is a picture added to the view 2.

Therefore, in this embodiment of this application, the mobile phone 100 may set a flag for each texture ID, and the flag is 1 or 0. When the flag is 1, it indicates that the texture ID needs to be re-rendered. When the flag is 0, it indicates that the texture ID does not need to be re-rendered. A table shown in FIG. 11 includes related information (a view ID and a flag) of each piece of texture in the texture tree. In a subsequent process, if a picture added to a view needs to be updated (needs to be re-rendered), a flag of this texture ID in the texture tree is 1. If a flag of a texture ID in the texture tree is 0, it indicates that a picture added to this view does not need to be updated (does not need to be re-rendered).

It should be noted that, when a view in the view tree needs to be updated, the mobile phone 100 sets a flag of the view to 1, correspondingly sets a flag of a display ID that corresponds to the view and that is in the display list tree to 1, and sets a flag of a texture ID that corresponds to the display ID and that is in the texture tree to 1. For example, with reference to FIG. 10 and FIG. 11, when the view 2 in the view tree needs to be updated, the mobile phone 100 sets a flag of the view 1 to 0, and sets a flag of the view 2 to 1. Correspondingly, the mobile phone 100 sets a flag of the display 1 to 0, and sets a flag of the display 2 to 1. Correspondingly, the mobile phone 100 sets a flag of the texture 1 to 0, and sets a flag of the texture 2 to 1.

If FIG. 6(b) and FIG. 6(c) are used as an example, because the picture added to only the area 3 is to be updated, a flag of a texture ID 3 that corresponds to the view 3 and that is in the texture tree is 1. To be specific, the mobile phone 100 needs to re-render texture of the view 3. Flags of other texture are 0, and re-rendering is not required.

S907: The mobile phone 100 determines, based on the texture tree, texture that needs to be re-rendered and texture that does not need to be re-rendered, and re-renders the texture that needs to be re-rendered.

Referring to FIG. 11, the mobile phone 100 may determine, in the texture table, texture whose flag is 1, namely, the texture 2. Therefore, the mobile phone 100 needs to re-render the texture 2. The mobile phone 100 may re-render the texture 2 of the view 2 based on the rendering element of the view 2. In an example, the graphic rendering instruction may include display content of each area, and the display content may be texture, namely, a picture, to be added to each area. Therefore, the graphic rendering instruction generated by the mobile phone 100 includes the texture to be added to the to-be-updated area, and the mobile phone 100 adds, to the outline of the to-be-updated area, the texture that corresponds to the to-be-updated area and that is included in the graphic rendering instruction.

In another example, the graphic rendering instruction may include display content of each area, and the display content may be a texture identifier of texture to be added to each area. The texture identifier may be a storage path for storing the texture in the mobile phone 100 or another identifier, provided that the texture can be determined based on the texture identifier. This is not limited in this embodiment of this application. Therefore, after generating the graphic rendering instruction, the mobile phone 100 knows the texture identifier of the texture to be added to only the to-be-updated area. The mobile phone 100 may determine, based on the texture identifier, the texture corresponding to the texture identifier, and then add the texture to the outline of the to-be-updated area. For example, the mobile phone 100 may set a correspondence between each piece of texture and a texture identifier, determine, in the correspondence between each piece of texture and a texture identifier based on the texture identifier that corresponds to the to-be-updated area and that is included in the graphic rendering instruction, the texture corresponding to the texture identifier, and then add the texture to the outline of the view that needs to be updated.

Therefore, content (a picture) displayed in the view 2 in a previous frame of graphic is different from content displayed in the view 2 in a current frame of graphic. If FIG. 6(c) is used as an example, compared with the texture of the area 3 in FIG. 6(b), the texture of the area 3 in FIG. 6(c) is re-rendered. Therefore, content displayed in the area 3 in FIG. 6(b) changes to content displayed in the area 3 in FIG. 6(c).

The mobile phone 100 does not need to re-render texture of other views. In other words, for the other views, corresponding texture is still used for adding. The view 1 is used as an example, the view 1 in the previous frame of graphic is added with the texture 1, and therefore, the mobile phone 100 continues to add the texture 1 in the outline of the view.

In some other embodiments of this application, when re-rendering the texture of the view, the mobile phone 100 may refer to a layer relationship between the view and another view. For example, a view needs to be re-rendered, but the view is at a layer below the another view, in other words, the view is blocked by the another view. Therefore, the mobile phone 100 does not need to re-render the view.

S908: The mobile phone 100 synthesizes a view obtained after the texture is re-rendered and the original view into a GUI.

For example, referring to FIG. 10 and FIG. 11, the view 2 needs to be re-rendered, and other views do not need to be re-rendered. The mobile phone 100 may synthesize the re-rendered view 2 and the other views into one GUI.

For example, the software architecture shown in FIG. 8 is used as an example. The WMS may synthesize the re-rendered view 2 and the other views into one GUI. Details are not described herein.

S909: The mobile phone 100 displays the GUI.

For example, the software architecture shown in FIG. 8 is used as an example, the WMS synthesizes the re-rendered view 2 and the other views into one GUI, and sends the GUI to the surfaceFlinger. The surfaceFlinger delivers the GUI to the display driver at the kernel layer, to drive the display 194 to display the GUI.

It can be learned from the foregoing description that, in the graphic rendering method provided in this embodiment of this application, when some views in a new GUI need to be updated, the mobile phone 100 needs to render only the views that need to be updated, and does not need to render a view that does not need to be updated. In this way, power consumption is reduced and efficiency is improved.

The implementations of this application may be randomly combined to achieve different technical effects.

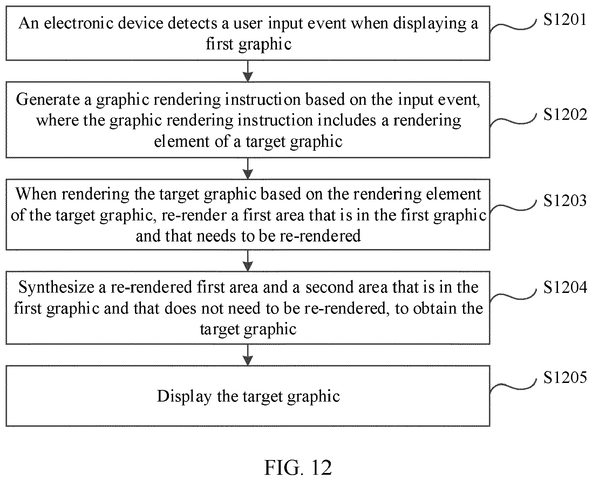

With reference to the foregoing embodiments and related accompanying renderings, an embodiment of this application provides a graphic rendering method. The method may be applied to an electronic device having a display, for example, a terminal device such as the mobile phone 100, a pad, or a notebook computer shown in FIG. 4. FIG. 12 is a schematic flowchart of a graphic rendering method according to an embodiment of this application. As shown in FIG. 12, this process of the method includes the following steps.

S1201: An electronic device detects a user input event when displaying a first graphic.

For example, the first graphic may be the interface 603 shown in FIG. 6(b), and the user input event may be the left sliding operation shown in FIG. 6(b).

S1202: Generate a graphic rendering instruction based on the input event, where the graphic rendering instruction includes a rendering element of a target graphic.

In an example, the graphic rendering instruction may be the instruction shown in FIG. 2, or another instruction. This is not limited in this embodiment of this application.

S1203: When rendering the target graphic based on the rendering element of the target graphic, re-render a first area that is in the first graphic and that needs to be re-rendered.

For example, the first area may be the area 3 in the interface 603 shown in FIG. 6(b).

S1204: Synthesize a first area and a second area that are obtained after the texture is re-rendered, to obtain the target graphic, where the second area is an area that is in the first graphic and that does not need to be re-rendered.

For example, the first area may be the area 3 in the interface 603 shown in FIG. 6(b), and the second area may be the area 1 and the area 2 in the interface 603. The electronic device may synthesize the area 1, the area 2, and the re-rendered area 3 into the target graphic, namely, the interface 604 shown in FIG. 6(c). The area 3 in the interface 604 is obtained after the area 3 in the interface 603 is re-rendered.

S1205: Display the target graphic.

For example, the target graphic is the interface 604 shown in FIG. 6(c).

In the foregoing embodiments provided in this application, the method provided in the embodiments of this application is described from a perspective in which the terminal device (the mobile phone 100) is used as an execution body. To implement functions in the method provided in the embodiments of this application, the terminal may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions.

An embodiment further provides a computer storage medium. The computer storage medium stores a computer instruction. When the computer instruction is run on an electronic device, the electronic device is enabled to perform one or more steps in the embodiment shown in FIG. 9 or FIG. 12, to implement the graphic rendering method in the foregoing embodiment.

This embodiment further provides a program product. When the program product runs on a computer, the computer is enabled to perform one or more steps in the embodiment shown in FIG. 9 or FIG. 12, to implement the graphic rendering method in the foregoing embodiment.

In addition, an embodiment of this application further provides an apparatus. The apparatus may be specifically a chip, a component, or a module, and the apparatus may include a processor and a memory that are connected to each other. The memory is configured to store a computer executable instruction. When the apparatus runs, the processor may execute the computer executable instruction stored in the memory, so that the chip performs one or more steps in the embodiment shown in FIG. 9 or FIG. 12, to implement the graphic rendering method in the foregoing embodiment.

The electronic device, the computer storage medium, the program product, or the chip provided in this embodiment is configured to perform the corresponding method provided above. Therefore, for beneficial effects that can be achieved by the electronic device, the computer storage medium, the program product, or the chip, refer to the beneficial effects in the corresponding method provided above. Details are not described herein again.

It should be understood that in the specification, claims, and the accompanying renderings of the present invention, the terms "first", "second", and the like are intended to distinguish similar objects but do not necessarily indicate a specific order or sequence. It should be understood that the data termed in such a way is interchangeable in a proper circumstance, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to the expressly listed steps or modules, but may include other steps or modules not expressly listed or inherent to such a process, method, product, or device.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements the specific function in one or more processes in the flowcharts and/or in one or more blocks in the block diagrams.

These computer program instructions may be loaded onto the computer or the another programmable data processing device, so that a series of operations and steps are performed on the computer or the another programmable device, thereby generating computer-implemented processing. Therefore, the instructions executed on the computer or the another programmable device provide steps for implementing the specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the appended claims are intended to be construed as to cover the listed embodiments and all changes and modifications falling within the scope of the present invention. It is clear that persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A graphic rendering method, applied to an electronic device, wherein the method comprises:
detecting, by the electronic device, a user input event when displaying a first graphic;
generating a graphic rendering instruction based on the input event, wherein the graphic rendering instruction comprises a rendering element of a target graphic;
when rendering the target graphic based on the rendering element of the target graphic, re-rendering a first area that is in the first graphic and that needs to be re-rendered;
synthesizing a re-rendered first area and a second area to obtain the target graphic, wherein the second area is an area that is in the first graphic and that does not need to be re-rendered; and
displaying the target graphic.

2. The method according to claim 1, wherein the graphic rendering instruction comprises a rendering element of the first area but does not comprise a rendering element of the second area.

3. The method according to claim 1, wherein the graphic rendering instruction comprises a rendering element of each of all areas in the target graphic; and
before the re-rendering a first area that is in the first graphic and that needs to be re-rendered, the method further comprises:
determining the first area based on the graphic rendering instruction of the target graphic and a graphic rendering instruction of the first graphic, wherein the graphic rendering instruction of the first graphic comprises a rendering element of each of all areas in the first graphic.

4. The method according to any one of claims 1 to 3, wherein before the rendering the target graphic, the method further comprises:
setting an area identifier of the first area in the first graphic to a first identifier, and setting an area identifier of the second area in the first graphic to a second identifier, wherein the first identifier is used to indicate that the first area needs to be re-rendered, and the second identifier is used to indicate that the second area does not need to be re-rendered; and
the re-rendering a first area that is in the first graphic and that needs to be re-rendered comprises:
re-rendering an area whose area identifier is the first identifier.

5. The method according to any one of claims 1 to 4, wherein the graphic rendering instruction comprises the rendering element of the first area, the rendering element comprises a first texture identifier corresponding to the first area, and the re-rendering a first area that is in the first graphic and that needs to be re-rendered comprises:
determining, based on a correspondence between a texture identifier and texture, first texture corresponding to the first texture identifier; and
re-rendering the first area based on the first texture.

6. The method according to any one of claims 1 to 5, wherein before the re-rendering the first area, the method further comprises:
determining a layer relationship between the first area and another area, wherein the another area is an area other than the first area in the target graphic; and
the re-rendering the first area is specifically:
re-rendering the first area when the layer relationship indicates that the first area is at a layer above the another area.

7. The method according to any one of claims 1 to 5, wherein the rendering element comprises one or more of a display position, a size, a shape, and display content of each area.

8. An electronic device, wherein the electronic device comprises a display, one or more processors, a memory, a plurality of applications, and one or more computer programs, wherein the one or more computer programs are stored in the memory, the one or more computer programs comprise instructions, and when the instructions are executed by the electronic device, the electronic device is enabled to perform the following steps:
detecting, by the electronic device, a user input event when displaying a first graphic;
generating a graphic rendering instruction based on the input event, wherein the graphic rendering instruction comprises a rendering element of a target graphic;
when rendering the target graphic based on the rendering element of the target graphic, re-rendering a first area that is in the first graphic and that needs to be re-rendered;
synthesizing a re-rendered first area and a second area to obtain the target graphic, wherein the second area is an area that is in the first graphic and that does not need to be re-rendered; and
displaying the target graphic.

9. The electronic device according to claim 8, wherein the graphic rendering instruction comprises a rendering element of the first area but does not comprise a rendering element of the second area.

10. The electronic device according to claim 8, wherein the graphic rendering instruction comprises a rendering element corresponding to each of all areas in the target graphic; and
when the instructions are executed by the electronic device, the electronic device is enabled to specifically perform the following step:
determining the first area based on the graphic rendering instruction of the target graphic and a graphic rendering instruction of the first graphic, wherein the graphic rendering instruction of the first graphic comprises a rendering element of each of all areas in the first graphic.

11. The electronic device according to any one of claims 8 to 10, wherein when the instructions are executed by the electronic device, the electronic device is enabled to perform the following steps:
setting an area identifier of the first area in the first graphic to a first identifier, and setting an area identifier of the second area in the first graphic to a second identifier, wherein the first identifier is used to indicate that the first area needs to be re-rendered, and the second identifier is used to indicate that the second area does not need to be re-rendered; and
re-rendering an area whose area identifier is the first identifier.

12. The electronic device according to any one of claims 8 to 11, wherein the graphic rendering instruction comprises the rendering element of the first area, and the rendering element comprises a first texture identifier corresponding to the first area; and
when the instructions are executed by the electronic device, the electronic device is enabled to specifically perform the following steps:
determining, based on a correspondence between a texture identifier and texture, first texture corresponding to the first texture identifier; and
re-rendering the first area based on the first texture.

13. The electronic device according to any one of claims 8 to 12, wherein when the instructions are executed by the electronic device, the electronic device is enabled to specifically perform the following steps:
determining a layer relationship between the first area and another area, wherein the another area is an area other than the first area in the target graphic; and
re-rendering the first area when the layer relationship indicates that the first area is at a layer above the another area.

14. The electronic device according to any one of claims 8 to 13, wherein the rendering element comprises one or more of a display position, a size, a shape, and display content of each area.

15. A computer storage medium, comprising computer instructions, wherein when the computer instructions are run on an electronic device, the electronic device is enabled to perform the graphic rendering method according to any one of claims 1 to 7.

16. A program product, wherein when the program product runs on a computer, the computer is enabled to perform the graphic rendering method according to any one of claims 1 to 7.
